# EUROPEAN PATENT SPECIFICATION

(11) **EP 0 337 357 B1**
(45) Date of publication and mention of the grant of the patent: **14.06.1995**
(21) Application number: 89106331.5
(22) Date of filing: 10.04.1989
(51) Int. Cl.: B65D 90/04

(54) **Tank construction and method of manufacture**
Behälterkonstruktion und Verfahren zur Herstellung
Construction d'un réservoir et méthode de fabrication

(30) Priority: 11.04.1988 US 179670
(43) Date of publication of application: 18.10.1989
(73) Proprietor: STATE INDUSTRIES, INC., Ashland City, TN 37015-1296 (US)
(72) Inventor: Lindahl, John R., Chapmansboro, TN 37035 (US)
(74) Representative: Grünecker, Kinkeldey, Stockmair & Schwanhäusser Anwaltssozietät

(56) References cited:
- EP-A- 0 184 491
- EP-A- 0 223 367
- DE-B- 1 261 799
- DE-C- 802 462
- FR-A- 2 070 625
- US-A- 4 625 892

## Description

The invention relates to a method of making a tank according to the preamble part of independent claim 1. Such tanks are particularly designed for use in a direct fired water heater but could have applications for other types of tanks also.

In a tank construction as known from US-A-4 625 892 a rigid polyolefin tank is provided within a metallic outer shell wherein there is no adherence or bonding between the walls of the inner tank and the outer shell. The inner tank is formed in the outer metallic shell by a rotational molding technique. The tank construction becomes cooled resulting in shrinkage of the inner tank away from the metallic walls of the outer shell. During the cooling cycle the interior of the inner tank is pressurized to control the shrinkage. The tank construction is employed for the transportation of bulk chemicals, usually in liquid form.

EP-A-0 184 491 discloses a water heater tank consisting of two interconnecting shell parts made of aluminium alloy. Within said tank construction, an interior lining of plastics may be employed.

A vessel of water boiler as known from DE-C-802 462 consists of two deep-drawn metal parts welded together. A heat resistant varnish can be provided on the surfaces of the vessel.

FR-A-2 070 625 discloses a wine container made from steel and coated with plastics.

EP-A-0 223 367 discloses a method for rotationally casting a plastic tank liner for a pressure vessel.

DE-B-1 261 799 discloses a closed steel-container for a water boiler. The container consists of shell parts welded together. The interior surface of the container is treated with plastics or enamel.

GB-B-1 466 774 discloses a method of coating the internal surface of a hollow body with thermoplastic or thermosetting plastics, in which the body is heated to a temperature above the melting point of the plastic material and is caused to rotate about the axis of its hollow interior, whereupon finely divided plastic material is introducted into the interior by injection. The body is moved in a particular way until finally an opening of the body faces downwards for the discharge of excess plastic material.

It is a task of the invention to create an improved method for manufacturing a tank.

This is achieved with the method carried out according to claim 1.

An embodiment of a prior art tank construction and embodiments of the tank constructions manufactured according to the method of the present invention are described in connection with the drawings.
FIGURE 1 is a side view (with parts broken away) of a conventional glass lined tank of the type used in the manufacture of residential water heaters for many years;
FIGURE 1(a) is an enlarged fragmentary view of the circled area A on FIGURE 1;
FIGURE 1(b) is a top plan view of the water heater shown in FIGURE 1;
FIGURE 2 is a perspective view of the two parts of the outer shell of the tank of the present invention prior to the assembly of such parts into the completed shell;
FIGURE 3 is a perspective view of the outer shell of the tank with the two parts fastened together;
FIGURE 4 is a partially schematic view of the outer shell of the tank when subjected to rotational movement;
FIGURE 5 is a side elevational view of the completed tank with a part of the outer and inner shells broken away;
FIGURE 6 is an enlarged fragmentary view of the area 6 of FIGURE 5;
FIGURE 7 is an enlarged fragmentary sectional view showing one embodiment of the welded connection between the two parts of the outer shell;
FIGURES 8-11 are enlarged fragmentary sectional views of other embodiments of the welded connection between the two parts of the outer shell;
FIGURE 12 is a partially schematic perspective view showing the fabrication step wherein a polymer material is introduced into a shell half member before the half members are welded together;
FIGURE 13 is a partially schematic view showing the two half members being welded together;
FIGURE 14 is a partial schematic elevation view of a rotational casting apparatus suitable for use in the method of the present invention; and
FIGURE 15 is a partially schematic end view of the apparatus shown in FIGURE 14.

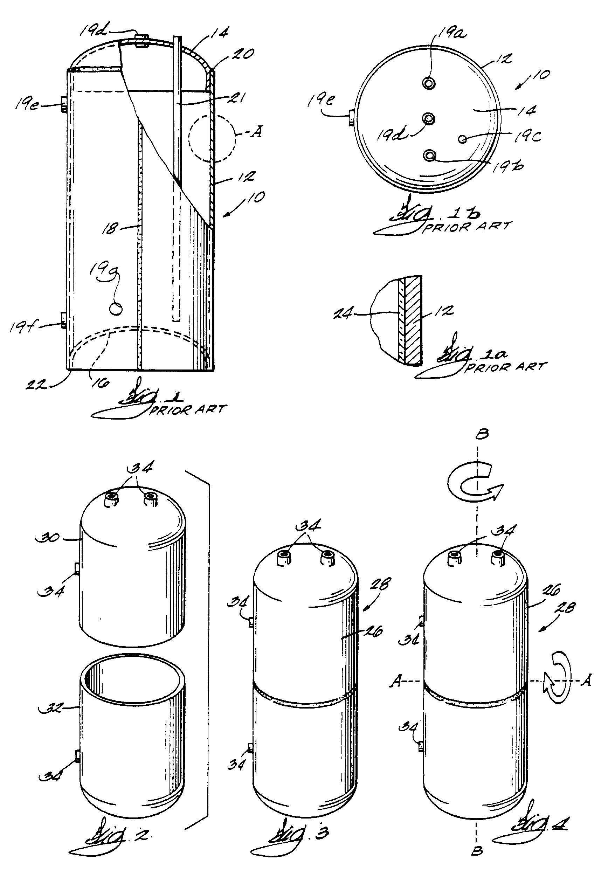

FIGURES 1, 1(a), and 1(b) show the construction of a conventional glass lined tank 10 of the type used in the manufacture of residential water heaters for many years.

The tank 10 is comprised of a shell member 12, a top member 14 and a bottom member 16. Shell 12 is made from a rolled sheet of steel which is welded longitudinally as indicated by reference numeral 18 in FIGURE 1. Suitable connection fittings are welded to top member 14 and shell 12. Fittings 19(a), 19(b), 19(c), 19(d) (FIGURE 1b) are for a hot water connection, a cold water connection, a mounting for a sacrificial anode, and a mounting for a temperature - pressure relief valve, respectively. Fittings 19(e) and 19(f) (Fig. 1) are for heating element and thermostat connections, respectively, and fitting 19(g) is a drainage valve connection.

Top member 14 is fastened to shell 12 by a weld 20. After top member 14 and shell 12 have been assembled and welded a glass lining is applied to the inside surface of the top member and shell by a conventional process which is well known in the art.

A glass lining is also applied to what will constitute the bottom member 16. Bottom member 16 with the glass lining applied thereto is then welded into the bottom of shell 12 by a weld 22 to complete the fabrication of the tank. FIGURE 1(a) is an enlarged view of area A in FIGURE 1 showing the glass lining 24 applied to the shell 12. As indicated above, top and bottom members 14 and 16 will also have a glass lining thereon like lining 24 on shell 12. It will be appreciated that when making the final weld 22 to fasten bottom member 16 to shell 12, the heat produced in the weld area may cause hairline cracks or other damage to the glass lining in such area. A sacrificial anode member 21 is provided to retard corrosion of any metal portion of the tank that is contacted by water in the tank because of failure of the glass lining.

The construction of the tank of this invention will be described by a step-by-step description of the method of constructing the tank.

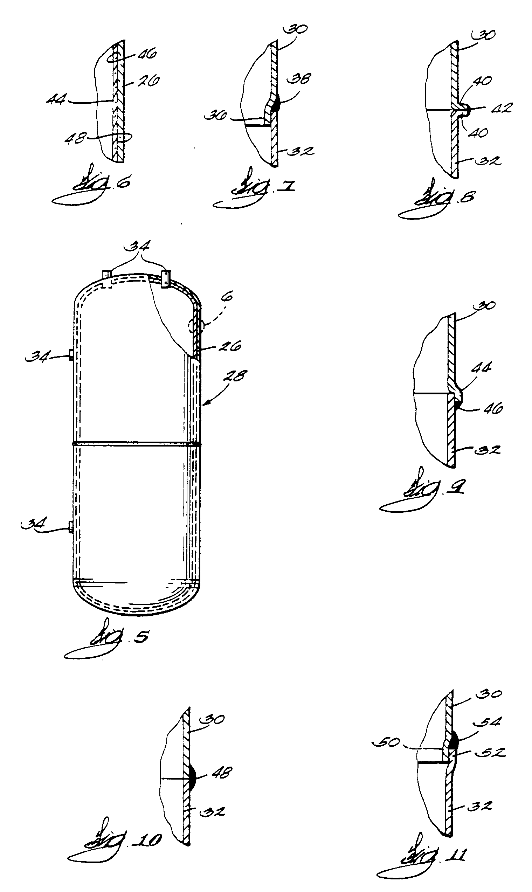

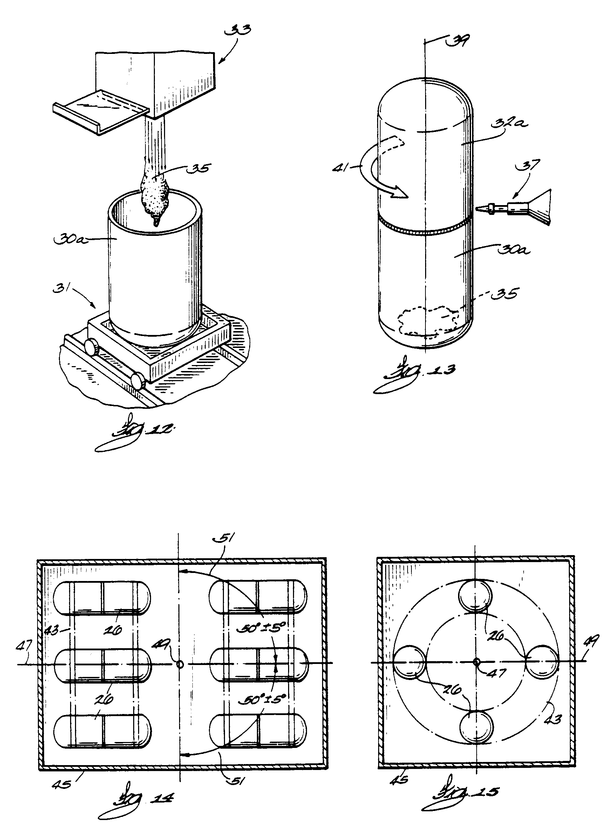

Referring to FIGURES 2 and 3, outer shell 26 of the completed tank 28 is comprised of two parts, namely an upper half member 30 and a lower half member 32. In one embodiment of the invention, half members 30 and 32 are made of steel or other suitable metal and are each formed from a single blank of such metal by a deep drawing process. The type of metal used and the wall thickness of each finished half member 30 and 32 will vary depending on the tank application involved. As an example of a typical embodiment of a steel tank for a residential electric water heater with a rated capacity of 151,4 ℓ (40 gallons) the specifications may be as follows:

| | |
|---|---|
| Steel | Cold Rolled (A.K.D.Q.) |
| Wall thickness | 1,0-1,65 mm (.040 - .065 inches) |
| Diameter | approximately 406 mm (16 inches) |
| Vertical Height (each half) | approximately 584 mm (23 inches) |
| Method of Deep Drawing | Draw-reverse draw-redraw combination |

It will be appreciated that outer shell 26 could be fabricated from more than two parts. For example an extra long shell could be fabricated from a top and bottom member and an intermediate member of cylindrical shape.

Also in the embodiment, a plurality of connection fittings 34 are mounted on the half members for purposes of connection to hot and cold water lines, mounting and connecting internal heating elements, a drainage connection and any other desired purpose.

Referring to FIGURE 3, the half members are fastened together in a secure manner to form a completed outer shell 26. In the embodiment, the half members 30 and 32 are securely fastened to each other by welding. Suitable welded joints for this purpose are shown in FIGURES 7, 8, 9, 10 and 11.

In the FIGURE 7 embodiment, half member 30 is deformed as at 36 to provide an overlapping fit with half members 30 and 32 fastened together by a weld 38. In the FIGURE 8 embodiment, half members 30 and 32 are provided with mating flanges 40 with half members 30 and 32 fastened together by a weld 42. In the FIGURE 9 embodiment, half member 30 is deformed as at 44 to provide an overlapping fit with the half member fastened together by a weld 46. In the FIGURE 10 embodiment the edges of the half members are positioned in abutting relationship and then fastened together by a weld 48. In the FIGURE 11 embodiment, half members 30 and 32 are deformed as at 50 and 52 to provide an overlapping fit with the half members fastened together by a weld 54.

After the completed outer shell is fabricated as described above, an inner shell 44 of non-corrosive material (i.e. a material from the family of polymers) is formed inside the outer shell adjacent the internal surface 46 of the outer shell 26 (FIGURES 5 and 6). For example, the non-corrosive material may be polyethylene, polypropylene, polybutylene, polysulfone or nylon. More specifically, in the preferred embodiment, the non-corrosive material is polybutylene material made by polymerization of butane-1 with Ziegler catalyst. In the embodiment, the inner shell is formed by a rotational casting procedure. More specifically, the polymer material is introduced into the outer shell 26 through any suitable opening therein and then all openings are closed by a suitable manner. The material preferably is in a powdered form.

An alternative to the above described fabrication method is shown in FIGURES 12 and 13. FIGURE 13 shows a tank half member 30(a) mounted on a conveyor means 31 and an automatic dispensing means 33. The tank half member 30(a) is moved relative to the dispensing means 33 and at the appropriate time a measured amount of polymer material 35 is dispensed from the dispenser means 33 into the opened end of the tank half 30(a).

FIGURE 13 shows the step of welding tank halves 30(a) and 32(a) together. Weld 35 is made by a laser welder shown schematically and identified by reference numeral 37. The weld 35 is be made by rotating the tank halves 30(a), 32(a) relative to welding apparatus 37 about the vertical axis 39 of the tank as indicated by the arrow 41 in FIGURE 13. It will be noted that the weld 35 is made with the axis 39 of the tank in a vertical position. By following this procedure, the polymer material 35 in the tank will be located in the bottom of the tank remote from the weld area during the welding operation.

The outer shell 26 charged with a polymer material as described above is then subjected to a rotational casting movement while heat is applied to the outer shell. As shown in FIGURE 4, such a rotational movement can be the simultaneous rotation of the outer shell 26 about axes A-A and B-B while heat is applied to the shell. In the FIGURE 4 embodiment. axes A-A and B-B are at the right angles to each other and intersect shell 26 at the center of the shell. Other rotational movements, either full or partial, may be used wherein the material in the tank will be distributed uniformly over the internal surface of the shell 26.

Referring again to a typical 151,4 ℓ (40 gallon) tank for use in a residential electric water heater, the specifications for the rotational procedure may be as follows:

| | |
|---|---|
| Non-corrosive material | polymer |
| Weight of non-corrosive material | range 0,9 to 3,2 kg (2.0 to 7.0 lbs). |
| Temperature applied to outer shell during rotation | range 177 to 427°C (350 to 800°F) |

In one acceptable rotational casting procedure, the tank is rotated about axis B at four times the speed of rotation around the Axis A as shown in FIGURE 4. Also in one embodiment, the time of rotation is within a range of 6-13 minutes.

A second acceptable rotational casting procedure is shown in FIGURES 14 and 15. As there shown, a plurality of assembled outer shells 36 (with polymer material introduced into the interior) are mounted on a rotatable rack structure shown schematically and identified by the reference numeral 43. Rack structure 43 is mounted in a casting oven shown schematically and identified by the reference numeral 45. The rack 43 is mounted in the oven for rotation in the oven about the axis 47. The rack 43 (with shells 26 mounted thereon) is rotated in the casting oven 45 by any suitable drive means (not shown). The oven itself is mounted on an axis 49 so that it can be rocked back and forth from a horizontal position about axis 49.

In practice, the outer shells 26 which have been charged with a polymer material are loaded into oven 45 on rack 43. The rack is then rotated about axes 47 while at the same time the oven is rocked back and forth about axis 49. During such rotation and rocking motion, heat is applied to the shells 26 on the rack. The temperature applied is within the range of 177 to 427°C (350-800°F) and the angle of rocking from the horizontal is 50° ± 5° as indicated by reference numeral 51.

By following one of the above procedures, an inner shell 44 is cast in place inside outer shell 26 with the external surface 48 of inner shell 44 located adjacent the internal surface 46 of the outer shell 26. In the embodiment described above, the thickness of inner shell 44 may be in the range of 1,27-2 mm (.050 - .080 inches).

The inner shell 44 thus provides a continuous and substantially leak-tight liner for the outer shell 26 to thus prevent any appreciable contact between the contents of the tank and the outer shell. There may be some very limited seepage into contact with the outer shell at the connection fittings 34. Such seepage of water will soon become starved of oxygen due to some very minor initial corrosion after which further corrosion will be negligible. Corrosion of the outer shell by the contents of the tank (such as water) is thus eliminated for all practical purposes.

It will be appreciated that shell 26 serves as a mold which is not removable or reusable but becomes a part of the completed tank 28. The rotational casting procedure described above may be performed by any suitable apparatus designed to produce the desired results.

It will be appreciated from the foregoing description that the completed tank 28 of this invention can be fabricated without subjecting the outer shell 26 to temperatures in excess of 427°C (800°F). Thus, since it is unnecessary to subject the steel material of the outer shell to annealing temperatures in excess of 427°C (800°F) (as is the case in prior glass lined tanks), the required tank strength for withstanding internal minimum hydrostatic test pressure as required by applicable industry standards can be obtained with a shell wall thickness which is substantially less than that required in the prior glass lined tank construction. The amount of steel required to fabricate a tank of any given capacity is thus substantially reduced.

It will be further appreciated that in the tank of the present invention, wherein the outer shell is fabricated from a pair of deep drawn half members fastened together by a single weld joint, the welding required is substantially reduced as compared with the prior glass lined tank.

It is also noted that the tank construction of the present invention wherein the outer shell is protected by the inner shell from corrosive effects by water or other liquids in the tank, corrosion protection measures such as the use of a sacrificial anode member mounted in the tank are eliminated resulting in a further reduction in cost.

## Claims

1. A method of making a tank (28) comprising the steps of:
forming an outer shell (26) having a plurality of connector fittings (34) mounted in the wall thereof, and subjecting the outer shell (26) when charged with a polymer material to a rotational movement in the presence of heat to thus cause the polymer material (35) to be uniformly distributed over the internal surface of the outer shell (26) to thereby form an inner shell (44) of non-corrosive material inside the outer shell wherein the inner shell provides a substantial leak-tight liner for the outer shell (26) to thus prevent contact between the contents of the tank (28) and the outer shell (26), said outer shell (26) serving as a mold for the inner shell (44), wherein said mold becomes a permanent part of the completed tank (28),
**characterised by**
outer shell parts (30,32,30a,32a), including a pair of top and bottom half members, formed by deep drawing, said outer shell parts having said connector fittings (34) for connection to hot and cold water lines, and
fastening said outer shell parts (30,32,30a,32a) by welding to form said outer shell (26), said welding step performed by a laser welder (37) wherein the laser welder is held stationary while the shell parts are rotated around their vertical axes (39).

2. The method of claim 1 **characterised by** charging the welded outer shell (26) with said non-corrosive polymer material (35) through one of said connector fittings (34) and sealing said connector fittings (34) after charging.

3. The method of claim 1 **characterised by** charging one of said shell parts with said polymer material (35) when said shell part is in a vertical position, and thereafter fastening the shell parts (30,32,30a,32a) together by welding, said welding procedure taking place with the shell parts in a vertical position and with the polymer material (35) therein lying at the bottom of one of said shell parts.

4. The method according to any one of claims 1 or 3, **characterised in that** the temperature of the heat applied by forming the inner shell (44) is in the range of 177 to 427°C (350 to 800°F).

5. The method according to any one of claims 1 to 4, **characterised in that** the weight of the polymer material (35) charged into one of said shell parts is within a range of 0.9072 kp to 3.1792 kp (two to seven pounds).

6. The method according to any one of claims 1 to 5, **characterised in that** the rotational movement is comprised of simultaneous rotation of the outer shell (26) about two separate axes A-A, B-B.

7. The method according to any one of claims 1 to 6, **characterised in that** the rotational movement is comprised of rotation of the outer shell (26) about its vertical axis A-A while simultaneously causing said outer shell (26) to be rocked back and forth about a second axis B-B extending at a right angle to said vertical axis A-A.

8. The method according to claim 7, **characterised in that** the rocking back and forth about the second axis B-B, extends approximately 50° from horizontal.

## Patentansprüche

1. Verfahren zum Herstellen eines Tanks (28) mit den folgenden Verfahrensschritten:
Des Ausbildens eines äußeren Mantels (26) mit einer Mehrzahl von Verbindungs-Anschlußstücken (34), die in seiner Wandung montiert sind, und dem Unterwerfen des äußeren Mantels (26), beladen mit einem Polymermaterial, einer Drehbewegung in der Anwesenheit von Wärme, um dadurch das Polymermaterial (35) zu veranlassen, sich gleichmäßig über die innere Oberfläche des äußeren Mantels (26) zu verteilen, um dadurch einen inneren Mantel (44) aus einem nicht korrodierenden Material innerhalb des äußeren Mantels zu bilden, wobei der innere Mantel eine im wesentlichen sickerdichte Auskleidung für den äußeren Mantel (26) darstellt, um dadurch einen Kontakt zwischen den Inhaltsstoffen des Tanks (28) und dem äußeren Mantel (26) zu verhindern, wobei der äußere Mantel (26) als Gießform für den inneren Mantel (44) dient, worin die Gießform ein dauerhafter Teil des vervollständigten Tanks (28) wird, **gekennzeichnet durch** äußere Mantelteile (30, 32, 30a, 32a), die ein Paar von Ober- und Bodenhalbteilen enthalten, die durch Tiefziehen gebildet sind, wobei die äußeren Mantelteile mit den Verbindungs-Anschlußstücken (34) zum Verbinden mit heißen und kalten Wasserleitungen versehen sind, und durch Befestigen der äußeren Mantelteile (30, 32, 30a, 32a) durch Schweißen, um den äußeren Mantel (26) zu bilden, wobei der Schweißschritt durch einen Laserschweißer (37) durchgeführt wird, wobei der Laserschweißer stationär gehalten wird, während die Mantelteile um ihre vertikalen Achsen (39) gedreht werden.

2. Verfahren nach Anspruch 1, **gekennzeichnet durch** das Beladen des verschweißten äußeren Mantels (26) mit dem nicht korrodierenden Polymermaterial (35) durch eine der Verbindungs-Anschlußstücke (34) und durch das Verschließen der Verbindungs-Anschlußstücke (34) nach dem Beladen.

3. Verfahren nach Anspruch 1, **gekennzeichnet durch** das Beladen von einem der Mantelteile mit dem Polymermaterial (35), wenn sich dieser Mantelteil in einer vertikalen Position befindet, und durch ein nachfolgendes Befestigen der Mantelteile (30, 32, 30a, 32a) aneinander durch Schweißen, wobei das Schweißverfahren stattfindet, während sich die Mantelteile in einer vertikalen Lage befinden, und das Polymermaterial (35) darin auf dem Boden eines der Mantelteile liegt.

4. Verfahren nach einem der Ansprüche 1 oder 3, **dadurch gekennzeichnet**, daß die Temperatur der aufgebrachten Wärme während der Ausbildung des inneren Mantels (44) im Bereich von 177 bis 427°C (350 bis 800°F) liegt.

5. Verfahren nach einem der Ansprüche 1 bis 4, **dadurch gekennzeichnet,** daß das Gewicht des in eines der Mantelteile eingefüllten Polymermaterials (35) innerhalb eines Bereichs von 0,9072 kg bis 3,1792 kg (2 bis 7 Pfund) beträgt.

6. Verfahren nach einem der Ansprüche 1 bis 5, **dadurch gekennzeichnet**, daß die Drehbewegung aus einer gleichzeitigen Drehung des äußeren Mantels (26) um zwei getrennte Achsen (A-A, B-B) zusammengesetzt ist.

7. Verfahren nach einem der Ansprüche 1 bis 6, **dadurch gekennzeichnet**, daß die Drehbewegung aus einer Drehung des äußeren Mantels (26) um seine vertikale Achse (A-A) zusammengesetzt ist, während gleichzeitig der äußere Mantel gezwungen wird, sich vor und zurück um eine zweite Achse (B-B) zu verkippen, die unter einem rechten Winkel zur vertikalen Achse (A-A) verläuft.

8. Verfahren nach Anspruch 7, **dadurch gekennzeichnet**, daß das vor und zurück erfolgende Kippen um die zweite Achse (B-B) sich etwa 50° aus der Horizontalen erstreckt.

## Revendications

1. Procédé de fabrication d'un réservoir (28) comprenant les étapes consistant à :
former une enveloppe extérieure (26) disposant d'une pluralité de raccords de branchement (34) montés dans la paroi de celle-ci, et à soumettre l'enveloppe extérieure (26), lorsqu'elle est chargée d'un matériau polymère, à un mouvement de rotation en présence de chaleur pour ainsi faire en sorte que le matériau polymère (35) soit uniformément réparti sur la surface intérieure de l'enveloppe extérieure (26) de façon à former une enveloppe intérieure (44) en matériau non corrosif à l'intérieur de l'enveloppe extérieure, dans lequel l'enveloppe intérieure constitue une garniture essentiellement étanche pour l'enveloppe extérieure (26) pour ainsi éviter qu'il ne se produise un contact entre les contenus du réservoir (28) et l'enveloppe extérieure (26), ladite enveloppe extérieure (26) servant de moule pour l'enveloppe intérieure (44), dans lequel ledit moule devient une partie permanente du réservoir complet (28), caractérisé par des parties d'enveloppe extérieure (30, 32, 30a, 32a), comprenant une paire de demi-éléments de dessus et de fond formés par emboutissage profond, lesdites parties d'enveloppe extérieure disposant desdits raccords de branchement (34) pour le branchement aux canalisations d'eau chaude et d'eau froide, et par la fixation desdites parties d'enveloppe extérieure (30, 32, 30a, 32a) en les soudant pour former ladite enveloppe extérieure (26), ladite étape de soudure étant effectuée par un soudeur laser (37) dans laquelle le soudeur laser est maintenu stationnaire pendant que les parties d'enveloppe sont mises en rotation autour de leurs axes verticaux (39).

2. Procédé selon la revendication 1, caractérisé par le chargerment de l'enveloppe extérieure soudée (26) par ledit matériau polymère non corrosif (35) à travers l'un desdits raccords de branchement (34) et à fermer de façon étanche lesdits raccords de branchement (34) après le chargement.

3. Procédé selon la revendication 1, caractérisé par le chargement de l'une desdites parties d'enveloppe par ledit matériau polymère (35) lorsque ladite partie d'enveloppe est en position verticale, puis à fixer ensemble lesdites parties d'enveloppe (30, 32, 30a, 32a) par soudage, ladite procédure de soudage s'effectuant alors que les parties d'enveloppe sont en position verticale et que le matériau polymère (35) repose au fond de l'une desdites parties d'enveloppe.

4. Procédé selon l'une quelconque des revendications 1 ou 3, caractérisé en ce que la température de la chaleur qui est appliquée pour former l'enveloppe intérieure (44) est comprise entre 177 et 427 °C (350 et 800°F).

5. Procédé selon l'une quelconque des revendications 1 à 4, caractérisé en ce que la masse de matériau polymère (35) qui est chargée dans l'une desdites parties d'enveloppe est comprise entre 0,9072 kg et 3,1792 kg (deux et sept livres).

6. Procédé selon l'une quelconque des revendications 1 à 5, caractérisé en ce que le mouvement de rotation est composé d'une rotation simultanée de l'enveloppe extérieure (26) autour de deux axes séparés A-A, B-B.

7. Procédé selon l'une quelconque des revendications 1 à 6, caractérisé en ce que le mouvement de rotation est composé d'une rotation de l'enveloppe extérieure (26) autour de son axe vertical A-A tout en faisant simultanément basculer ladite enveloppe extérieure (26) d'avant en arrière autour d'un second axe B-B qui est perpendiculaire audit axe vertical A-A.

8. Procédé selon la revendication 7, caractérisé en ce que le basculement d'avant et arrière autour du second axe B-B s'effectue à environ 50° par rapport à l'horizontale.
